# EUROPEAN PATENT SPECIFICATION

(11) **EP 2 797 469 B1**
(45) Date of publication and mention of the grant of the patent: **14.09.2016**
(21) Application number: 12813364.2
(22) Date of filing: 21.12.2012
(51) Int. Cl.: A47J 31/057

(54) **A HOT BEVERAGE PREPARATION MACHINE**
MASCHINE ZUR ZUBEREITUNG HEISSER GETRÄNKE
MACHINE DE PRÉPARATION DE BOISSON CHAUDE

(30) Priority: 30.12.2011 TR 201113314
(43) Date of publication of application: 05.11.2014
(73) Proprietor: Arçelik Anonim Sirketi, 34950 Istanbul (TR)
(72) Inventor: COBAN, Omer Burak, 34950 Istanbul (TR); GERZELI, Ismail, 34950 Istanbul (TR); HASANREISOGLU, Ali Levent, 34950 Istanbul (TR)
(86) International application number: PCT/EP2012/076668
(87) International publication number: WO 2013/098242

(56) References cited:
- GB-A- 221 264
- GB-A- 633 988
- US-A- 2 550 902

## Description

The present invention relates to a hot beverage preparation machine comprising a handle.

In hot beverage preparation machines, the water filled into the water container is heated by a water heater and is transferred to the brewing chamber containing raw material of the beverage to be prepared. The brewing process is performed in the brewing chamber as the result of the interaction between the beverage raw material and water. The brewed beverage is transferred into a pot afterwards and served.

In the state of the art embodiments, Great Britain Patent Applications No. GB221264 and GB2102280, water heated in the water container is transferred to the brewing chamber by being conveyed upwards through a pipe passing inside the handle.

The aim of the present invention is the realization of a hot beverage preparation machine that is easily produced and that occupies less space.

In the hot beverage preparation machine realized in order to attain the aim of the present invention and explicated in the claims, the pipe providing the water heated in the water container to be transferred into the brewing chamber is embedded into the handle. On the water container, an orifice providing the water in the water container to be transferred into the brewing chamber is situated. The orifice is positioned on the upper surface of the water container so as to face different directions with respect to the upper end of the handle. Thus, while the pipe providing the transfer of water is prevented from occupying more space in the hot beverage preparation machine, the water heated in the water container is provided to be transferred into the brewing chamber in a practical manner.

In an embodiment of the present invention, an opening enabling the filling/emptying of the water container is situated on the upper surface of the water container. In this embodiment, the connection line is passed around the opening.

In an embodiment of the present invention, the platform and the brewing chamber are separated from the part containing the pot group by means of a side wall. In this embodiment, when the water container is placed onto the platform, the orifice is situated at the part of the water container aligning with the side wall and the handle is positioned so as to face the outer environment, not the side wall.

In an embodiment of the present invention, the water container has a circular cross-section, and the handle and the orifice are positioned so as to be on two lines almost perpendicular to each other, both passing through the center of the upper surface of the water container.

In an embodiment of the present invention, the water container has a circular cross-section, and the handle and the orifice are positioned so as to be on two ends of a line passing through the center of the upper surface of the water container.

In an embodiment of the present invention, the hot beverage preparation machine comprises a skirt surrounding the opening. In this embodiment, the connection line is installed so as to be hidden in the skirt.

In another embodiment of the present invention, a lid is placed over the opening and the connection line is installed so as to be below the lid.

In a derivative of this embodiment, the lid comprises an inner lid and an outer lid, both mounted one over other. In this embodiment, the connection line is placed between the inner lid and the outer lid.

In an embodiment of the present invention, the lid is fastened to the water container so as to open by rotating by means of a hinge. In this embodiment, the connection line is positioned so as to pass through the axis of the hinge.

In an embodiment of the present invention, the hinge is positioned so as to be at the same level with the upper end of the handle. In this embodiment, while passing through the hinge, the connection line changes its direction by rotating almost 90 degrees.

In an embodiment of the present invention, at least one rib grasping the connection line is situated on the hinge.

By means of the present invention, a hot beverage preparation machine that occupies less space on the counter and that is easily produced and used is realized.

The hot beverage preparation machine realized in order to attain the aim of the present invention is illustrated in the attached figures, where:

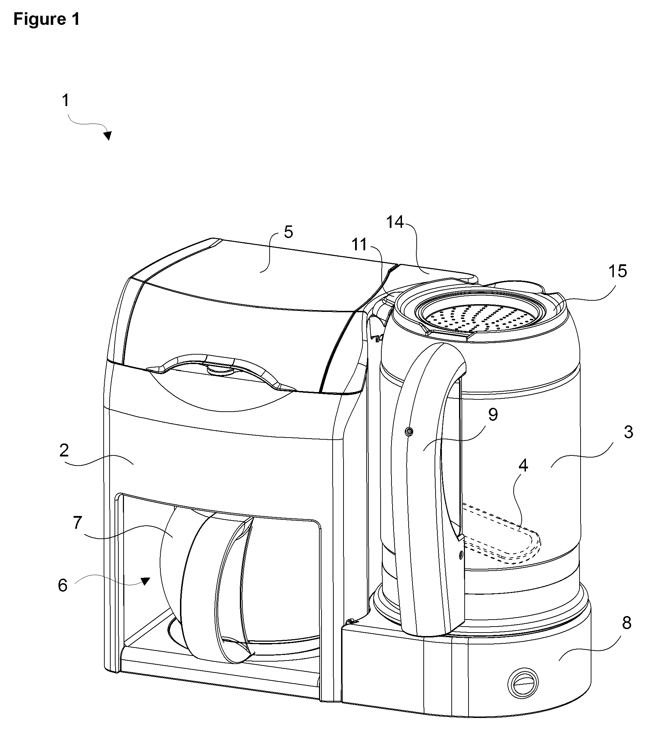

Figure 1 - is the perspective view of a hot beverage preparation machine.

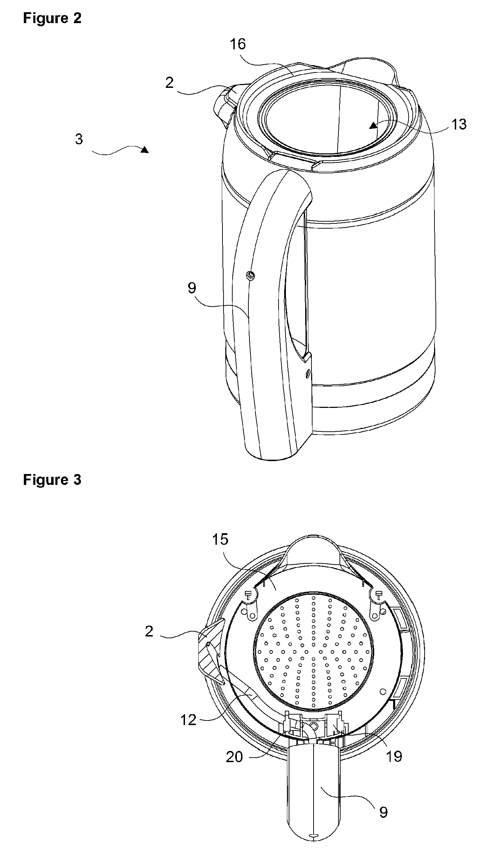

Figure 2 - is the perspective view of a water container.
Figure 3 - is the top cross-sectional view of a water container and a lid.

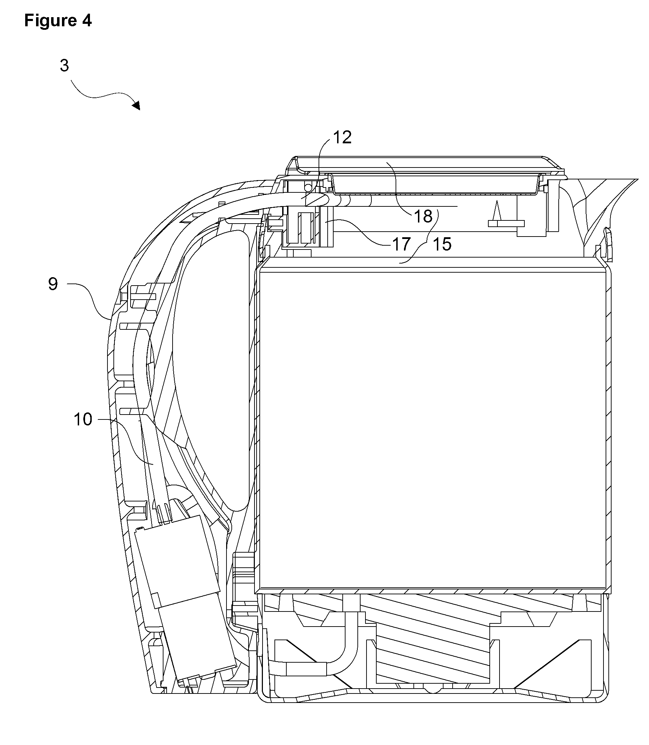

Figure 4 - is the sideways cross-sectional view of a water container and a lid.

The elements illustrated in the figures are numbered as follows:
1. Hot beverage preparation machine
2. Body
3. Water container
4. Water heater
5. Brewing chamber
6. Housing
7. Pot
8. Platform
9. Handle
10. Pipe
11. Orifice
12. Connection line
13. Opening
14. Side wall
15. Lid
16. Skirt
17. Inner lid
18. Outer lid
19. Hinge
20. Rib

The hot beverage preparation machine (1) comprises:
- a body (2),
- a water container (3) wherein water is filled,
- a water heater (4) that provides the water in the water container (3) to be heated,
- a brewing chamber (5) wherein the raw material of the beverage to be prepared is put and whereto the water heated in the water container (3) is transferred, wherein the brewing process is performed as the result of the interaction between the beverage raw material and water,
- a housing (6) situated on the body (2), under the brewing chamber (5),
- a pot (7) placed into the housing (6), the top surface being at least partially open, whereto the beverage brewed in the brewing chamber (5) is transferred,
- a platform (8) that is positioned to be next to the brewing chamber (5) and the pot (7), positioned one over the other on the body (2) and whereon the water container (3) is placed, enabling the water container (3) to be kept next to the brewing chamber (5) and the pot (7),
- a handle (9) enabling the water container (3) to be taken off the platform (8) by the user by being gripped,
- a pipe (10) that extends from bottom upwards in the handle (9) and that provides the water heated to be conveyed from the base of the water container (3) to the upper edge thereof and
- an orifice (11) that provides the water coming from the pipe (10) to be taken into the brewing chamber (5).

The hot beverage preparation machine (1) comprises the orifice (11) that is situated almost in the same plane with the upper end of the pipe (10) and that is positioned so as to be angular with respect to the upper end of the pipe (10), and comprises a connection line (12) that extends between the upper end of the pipe (10) and the orifice (11) and that provides the heated water to be delivered to the orifice (11) from the upper end of the pipe (10). Thus, a volume gain is obtained with the pipe (10) being passed inside the handle (9) and the handle (9) is provided to be situated at a position easily accessible by the user, and the water in the water container (3) is enabled to be easily transferred into the brewing chamber (5).

In the hot beverage preparation machine (1) of the present invention, when hot beverage is desired to be prepared, water is filled into the water container (3) and the water container (3) is placed on the body (2). The water in the water container (3) is provided to be heated by operating the water heater (4). The heated water is pumped into the pipe (10), thus rises and reaches the connection line (12). The water passing through the connection line (12) gets out by the orifice (11) and is transferred into the brewing chamber (5). After the brewing process is completed in the brewing chamber (5), the beverage is made ready to be served by being transferred into the pot (7) situated under the brewing chamber (5).

In an embodiment of the present invention, the hot beverage preparation machine (1) comprises an opening (13) arranged on the upper surface of the water container (3), enabling water to be filled in the water container (3), and the connection line (12) passing around the opening (13).

In an embodiment of the present invention, the body (2) comprises a side wall (14) that extends between the platform (8)-the pot (7) group and the brewing chamber (5). In this embodiment, the orifice (11) is situated at the face of the water container (3) facing the side wall (14) and the handle (9) is positioned so as not to align with the side wall (14). Thus, the handle (9) is provided to be positioned at a point easily accessible by the user.

In an embodiment of the present invention, the water container (3) is almost cylindrical and the handle (9) is positioned so as to make a 90-degree angle with the orifice (11). Thus, the handle (9) is provided to be situated at the front side of the hot beverage preparation machine (1).

In an embodiment of the present invention, the water container (3) is almost cylindrical and the handle (9) is positioned so as to make a 180-degree angle with the orifice (11). Thus, the depth occupied by the handle (9), hence by the hot beverage preparation machine (1) on the counter is decreased, thereby providing the efficient use of the counter.

In an embodiment of the present invention, the hot beverage preparation machine (1) comprises a skirt (16) that is situated at the upper surface of the water container (3) and around the opening (13). In this embodiment, the connection line (12) is embedded into the skirt (16). Thus, it is possible to place the connection line (12) at a position that cannot be seen by the user.

In an embodiment of the present invention, the hot beverage preparation machine (1) comprises a lid (15) covering the opening (13). In this embodiment, the connection line (12) is positioned so as to pass from under the lid (15). Thus, the connection line (12) is provided to be placed at a position that cannot be seen by the user, but that can be easily serviced.

In a derivative of this embodiment, the lid (15) comprises an inner lid (17) facing the inner volume of the water container (3) and an outer lid (18) facing the outer environment. In this embodiment, the connection line (12) is placed between the inner lid (17) and the outer lid (18). Thus, the connection line (12) is concealed both at the open and the closed position of the lid (15).

In an embodiment of the present invention, the hot beverage preparation machine (1) comprises a hinge (19) that provides the lid (15) to be fastened to the water container (3) in a rotatably openable manner. In this embodiment, the connection line (12) is passed through the hinge (19). Thus, the connection line (12) is prevented from being crashed and bent while the lid (15) is opened/closed.

In a derivative of this embodiment, the hinge (19) is situated at the same level with the handle (9). In this embodiment, the connection line (12) passes through the hinge (19) by rotating such that the end of the connection line (12) that enters into the hinge (19) is almost perpendicular to the end that exits the hinge (19).

In an embodiment of the present invention, the hinge (19) comprises at least one rib (20) that provides the connection line (12) passing therethrough to be guided. Thus, the connection line (12) is enabled to be correctly positioned in the hinge (19).

By means of the present invention, a hot beverage preparation machine (1) that occupies less space and that can be easily produced and used is realized.

It is to be understood that the present invention is not limited to the embodiments disclosed above and a person skilled in the art can easily introduce different embodiments. These should be considered within the scope of the protection postulated by the claims of the present invention.

## Claims

1. A hot beverage preparation machine (1) comprising
- a body (2),
- a water container (3) wherein water is filled,
- a water heater (4) that provides the water in the water container (3) to be heated,
- a brewing chamber (5) wherein the raw material of the beverage to be prepared is put and whereto the water heated in the water container (3) is transferred, wherein the brewing process is performed as the result of the interaction between the beverage raw material and water,
- a housing (6) situated on the body (2), under the brewing chamber (5),
- a pot (7) placed into the housing (6), the top surface being at least partially open, whereto the beverage brewed in the brewing chamber (5) is transferred,
- a platform (8) that is positioned to be next to the brewing chamber (5) and the pot (7), positioned one over the other on the body (2) and whereon the water container (3) is placed, enabling the water container (3) to be kept next to the brewing chamber (5) and the pot (7),
- a handle (9) enabling the water container (3) to be taken off the platform (8) by the user by being gripped,
- a pipe (10) that extends from bottom upwards in the handle (9) and that provides the water heated to be conveyed from the base of the water container (3) to the upper edge thereof and
- an orifice (11) that provides the water coming from the pipe (10) to be taken into the brewing chamber (5).
**characterized by**
- the orifice (11) that is situated almost in the same plane with the upper end of the pipe (10) and that is positioned so as to be angular with respect to the upper end of the pipe (10), and a connection line (12) that extends between the upper end of the pipe (10) and the orifice (11) and that provides the heated water to be delivered to the orifice (11) from the upper end of the pipe (10).

2. A hot beverage preparation machine (1) as in Claim 1, **characterized by** an opening (13) arranged on the upper surface of the water container (3), enabling water to be filled in the water container (3), and the connection line (12) passing around the opening (13).

3. A hot beverage preparation machine (1) as in Claim 1 or 2, **characterized by** the body (2) having a side wall (14) that extends between the platform (8)-the pot (7) group and the brewing chamber (5), the orifice (11) that is situated at the face of the water container (3) facing the side wall (14) and the handle (9) that is positioned so as not to align with the side wall (14).

4. A hot beverage preparation machine (1) as in any one of the above claims, **characterized by** the water container (3) that is almost cylindrical and the handle (9) that is positioned so as to make a 90-degree angle with the orifice (11).

5. A hot beverage preparation machine (1) as in any one of the claims 1 to 4 above, **characterized by** the water container (3) that is almost cylindrical and the handle (9) that is positioned so as to make a 180-degree angle with the orifice (11).

6. A hot beverage preparation machine (1) as in any one of the claims 2 to 5, **characterized by** a skirt (16) that is situated at the upper surface of the water container (3) and around the opening (13) and the connection line (12) that is embedded into the skirt (16).

7. A hot beverage preparation machine (1) as in any one of the claims 2 to 5, **characterized by** a lid (15) that covers the opening (13) and the connection line (12) that is positioned so as to pass from under the lid (15).

8. A hot beverage preparation machine (1) as in Claim 7, **characterized by** the lid (15) having an inner lid (17) facing the inner volume of the water container (3) and an outer lid (18) facing the outer environment and by the connection line (12) that is placed between the inner lid (17) and the outer lid (18).

9. A hot beverage preparation machine (1) as in Claim 7 or 8, **characterized by** a hinge (19) that provides the lid (15) to be fastened to the water container (3) in a rotatably openable manner and the connection line (12) that is passed through the hinge (19).

10. A hot beverage preparation machine (1) as in Claim 9, **characterized by** the hinge (19) that is situated at the same level with the handle (9) and the connection line (12) that passes through the hinge (19) by rotating such that the end of the connection line (12) that enters into the hinge (19) is almost perpendicular to the end that exits the hinge (19).

11. A hot beverage preparation machine (1) as in Claim 9 or 10, **characterized by** the hinge (19) that comprises at least one rib (20) that provides the connection line (12) passing therethrough to be guided.

## Patentansprüche

1. Heißgetränkzubereitungsmaschine (1), umfassend
- einen Gehäusekörper (2),
- einen Wasserbehälter (3), in den Wasser gefüllt wird,
- eine Wasserheizeinrichtung (4), die dafür sorgt, dass das Wasser im Wasserbehälter (3) erwärmt wird,
- eine Brühkammer (5), in die das Rohmaterial des zuzubereitenden Getränks gegeben wird und an die das im Wasserbehälter (3) erwärmte Wasser übertragen wird, wobei der Brühprozess als Ergebnis des Zusammenwirkens zwischen dem Getränkerohmaterial und Wasser erfolgt,
- ein Gehäuse (6), das an dem Gehäusekörper (2) unter der Brühkammer (5) angeordnet ist,
- einen Topf (7), der im Gehäuse (6) angeordnet ist, wobei die Oberseite wenigstens teilweise offen ist, und an den das in der Brühkammer (5) gebrühte Getränk übertragen wird,
- eine Plattform (8), die neben der Brühkammer (5) und dem Topf (7) angeordnet ist, welche übereinander am Gehäusekörper (2) angeordnet sind, und auf der der Wasserbehälter (3) angeordnet wird, so dass der Wasserbehälter (3) neben der Brühkammer (5) und dem Topf (7) gehalten werden kann,
- einen Griff (9), mit dem der Wasserbehälter (3) durch den Benutzer von der Plattform (8) genommen werden kann, indem er ergriffen wird,
- ein Rohr (10), das sich im Griff (9) von unten nach oben erstreckt und dafür sorgt, dass das erwärmte Wasser von der Basis des Wasserbehälter (3) zu seiner Oberkante geleitet wird, und
- eine Mündung (11), die dafür sorgt, dass das Wasser aus dem Rohr (10) in der Brühkammer (5) aufgenommen wird,
**dadurch gekennzeichnet, dass**
- die Mündung (11) nahezu in derselben Ebene wie das obere Ende des Rohrs (10) angeordnet ist und derart angeordnet ist, dass sie in Bezug auf das obere Ende des Rohrs (10) abgewinkelt ist, und durch eine Verbindungsleitung (12), die sich zwischen dem oberen Ende des Rohrs (10) und der Mündung (11) erstreckt und dafür sorgt, dass das erwärmte Wasser vom oberen Ende des Rohrs (10) zur Mündung (11) geleitet wird.

2. Heißgetränkzubereitungsmaschine (1) nach Anspruch 1, **gekennzeichnet durch** eine Öffnung (13), die an der Oberseite des Wasserbehälter (3) angeordnet ist und es ermöglicht, dass Wasser in den Wasserbehälter (3) wird, wobei die Verbindungsleitung (12) um die Öffnung (13) herum verläuft.

3. Heißgetränkzubereitungsmaschine (1) nach Anspruch 1 oder 2, **dadurch gekennzeichnet, dass** der Gehäusekörper (2) eine Seitenwand (14) aufweist, die sich zwischen der Gruppe Plattform (8) und Topf (7) und der Brühkammer (5) erstreckt, wobei die Mündung (11) an der Fläche des Wasserbehälters (3) angeordnet ist, die der Seitenwand (14) zugeordnet ist, und der Griff (9) derart angeordnet ist, dass er nicht an der Seitenwand (14) ausgerichtet ist.

4. Heißgetränkzubereitungsmaschine (1) nach einem der vorangehenden Ansprüche, **dadurch gekennzeichnet, dass** der Wasserbehälter (3) nahezu zylindrisch ist und der Griff (9) derart angeordnet ist, dass er einen Winkel von 90 Grad zur Mündung (11) einnimmt.

5. Heißgetränkzubereitungsmaschine (1) nach einem der Ansprüche 1 bis 4, **dadurch gekennzeichnet, dass** der Wasserbehälter (3) nahezu zylindrisch ist und der Griff (9) derart angeordnet ist, dass er einen Winkel von 180 Grad zur Mündung (11) einnimmt.

6. Heißgetränkzubereitungsmaschine (1) nach einem der Ansprüche 2 bis 5, **gekennzeichnet durch** eine Einfassung (16), die an der Oberseite des Wasserbehälter (3) und um die Öffnung (13) herum angeordnet ist, wobei die Verbindungsleitung (12) in die Einfassung (16) eingebettet ist.

7. Heißgetränkzubereitungsmaschine (1) nach einem der Ansprüche 2 bis 5, **gekennzeichnet durch** einen Deckel (15), der die Öffnung (13) abdeckt, wobei die Verbindungsleitung (12) derart angeordnet ist, dass sie unter dem Deckel (15) verläuft.

8. Heißgetränkzubereitungsmaschine (1) nach Anspruch 7, **dadurch gekennzeichnet, dass** der Deckel (15) einen inneren Deckel (17), der dem Innenvolumen des Wasserbehälters (3) zugewandt ist, und einen äußeren Deckel (18) aufweist, der der Außenumgebung zugewandt ist, dadurch, dass die Verbindungsleitung (12) zwischen dem inneren Deckel (17) und dem äußeren Deckel (18) angeordnet ist.

9. Heißgetränkzubereitungsmaschine (1) nach Anspruch 7 oder 8, **gekennzeichnet durch** ein Scharnier (19), das dafür sorgt, dass der Deckel (15) auf drehbare öffnungsfähige Weise am Wasserbehälter (3) befestigt ist, wobei die Verbindungsleitung (12) **durch** das Scharnier (19) verläuft.

10. Heißgetränkzubereitungsmaschine (1) nach Anspruch 9, **dadurch gekennzeichnet, dass** das Scharnier (19) auf derselben Höhe wie der Griff (9) angeordnet ist und die Verbindungsleitung (12) durch das Scharnier (19) verläuft, indem sie derart gedreht ist, dass das Ende der Verbindungsleitung (12), das in das Scharnier (19) eintritt, nahezu senkrecht zu dem Ende ist, das aus dem Scharnier (19) austritt.

11. Heißgetränkzubereitungsmaschine (1) nach Anspruch 9 oder 10, **dadurch gekennzeichnet, dass** das Scharnier (19) wenigstens eine Rippe (20) umfasst, die dafür sorgt, dass die dadurch verlaufende Verbindungsleitung (12) geführt wird.

## Revendications

1. Une machine de préparation de boissons chaudes (1) comprenant;
- un corps (2),
- un réservoir d'eau (3) dans lequel l'eau est remplie,
- un dispositif de chauffage d'eau (4) qui permet le chauffage de l'eau dans le réservoir d'eau (3),
- une chambre de préparation (5) dans laquelle la matière première de la boisson à préparer est placée et vers laquelle l'eau chauffée dans le réservoir d'eau (3) est transférée et dans laquelle le processus de préparation est réalisé en raison de l'interaction entre l'eau et la matière première de la boisson,
- un logement (6) qui est situé sur le corps (2) sous la chambre de préparation (5)
- un pot (7) dont la surface supérieure est au moins partiellement ouverte, qui est placé dans le logement (6), et auquel la boisson préparée dans la chambre de préparation (5) est transférée,
- une plate-forme (8) qui est positionnée de manière à être à côté de la chambre de préparation (5) et du pot (7) qui sont positionnés l'un sur l'autre sur le corps (2), sur laquelle le réservoir d'eau (3) est placé, permettant au réservoir d'eau (3) d'être maintenu à côté de la chambre de préparation (5) et du pot (7),
- une poignée (9) qui permet au réservoir d'eau (3) d'être soulevé de la plate-forme (8) par l'utilisateur en étant serrée,
- un tuyau (10) qui s'étend de bas en haut dans la poignée (9) et qui permet à l'eau chauffée d'être transportée à partir de la base du réservoir d'eau (3) au bord supérieur de celui-ci et
- un orifice (11) qui permet à l'eau venant du tuyau (10) d'être prise dans la chambre de préparation (5),
**caractérisée par**
- l'orifice (11) qui est situé presque dans le même plan que l'extrémité supérieure du tuyau (10) et qui est positionné de manière à pencher par rapport à l'extrémité supérieure du tuyau (10) et une ligne de raccordement (12) qui s'étend entre l'extrémité supérieure du tuyau (10) et l'orifice (11) et qui permet à l'eau chauffée d'être délivrée à l'orifice (11) à partir de l'extrémité supérieure du tuyau (10).

2. Une machine de préparation de boissons chaudes (1) selon la Revendication 1, **caractérisé par** une ouverture (13) qui est arrangée sur la surface supérieure du réservoir d'eau (3), qui permet à l'eau d'être remplie dans le réservoir d'eau (3), et la ligne de raccordement (12) qui passe autour de l'ouverture (13).

3. Une machine de préparation de boissons chaudes (1) selon la Revendication 1 ou 2, **caractérisée par** le corps (2) présentant une paroi latérale (14) qui s'étend entre le group plate-forme (8)-pot (7) et la chambre de préparation (5), l'orifice (11) qui est situé à la face du réservoir d'eau (3) faisant face à la paroi latérale (14), et la poignée (9) qui est positionnée de manière à ne pas aligner avec la paroi latérale (14).

4. Une machine de préparation de boissons chaudes (1) selon l'une quelconque des revendications précédentes, **caractérisée par** le réservoir d'eau (3) qui est à peu près cylindrique, et la poignée (9) qui est positionnée de manière a faire un angle de 90 degrés avec l'orifice (11).

5. Une machine de préparation de boissons chaudes (1) selon l'une quelconque des revendications de 1 à 4, **caractérisée par** le réservoir d'eau (3) qui est à peu près cylindrique, et la poignée (9) qui est positionnée de manière a faire un angle de 180 degrés avec l'orifice (11).

6. Une machine de préparation de boissons chaudes (1) selon l'une quelconque des revendications de 2 à 5, **caractérisée par** un rebord (16) qui est situé à la surface supérieure du réservoir d'eau (3) et autour de l'ouverture (13), et la ligne de raccordement (12) qui est encastrée dans le rebord (16).

7. Une machine de préparation de boissons chaudes (1) selon l'une quelconque des revendications de 2 à 5, **caractérisée par** un couvercle (15) qui recouvre l'ouverture (13), et la ligne de raccordement (12) qui est positionnée de manière à passer au-dessous du couvercle (15).

8. Une machine de préparation de boissons chaudes (1) selon la Revendication 7, **caractérisée par** le couvercle (15) présentant un couvercle intérieur (17) faisant face au volume intérieur du réservoir d'eau (3) et un couvercle extérieur (18) faisant face à l'environnement extérieur et par la ligne de raccordement (12) qui est placée entre le couvercle intérieur (17) et le couvercle extérieur (18).

9. Une machine de préparation de boissons chaudes (1) selon la Revendication 7 ou 8, **caractérisé par** une charnière (19) qui permet au couvercle (15) d'être fixé au réservoir d'eau (3) de manière à être ouverte par rotation, et la ligne de raccordement (12) qui est passée à travers la charnière (19).

10. Une machine de préparation de boissons chaudes (1) selon la Revendication 9, **caractérisée par** la charnière (19) qui est située au même niveau que la poignée (9), et la ligne de raccordement (12) qui passe à travers la charnière (19) par rotation de telle sorte que l'extrémité de la ligne de raccordement (12) entrant dans la charnière (19) est presque perpendiculaire à l'extrémité qui sort de la charnière (19).

11. Une machine de préparation de boissons chaudes (1) selon la Revendication 9 ou 10, **caractérisé par** la charnière (19) qui comprend au moins une nervure (20) qui permet à la ligne de raccordement (12) passant a travers celle-ci d'être guidée.
